# EUROPEAN PATENT SPECIFICATION

(11) **EP 3 116 359 B1**
(45) Date of publication and mention of the grant of the patent: **12.08.2020**
(21) Application number: 15761039.5
(22) Date of filing: 13.03.2015
(51) Int. Cl.: A47J 37/08, H05B 3/02, H05B 3/10

(54) **RAPID-TOASTING TOASTER**
SCHNELL-TOASTENDER TOASTER
GRILLE-PAIN GRILLANT RAPIDEMENT

(30) Priority: 14.03.2014 US 201461953451 P
(43) Date of publication of application: 18.01.2017
(73) Proprietor: Spectrum Brands, Inc., Middleton, WI 53562 (US)
(72) Inventor: MARSCHKE, Karl Warner, Madison, Wisconsin 53711 (US); KINNEY, Kevin Bruce, Verona, Wisconsin 53593 (US)
(74) Representative: Vossius & Partner Patentanwälte Rechtsanwälte mbB
(86) International application number: PCT/US2015/020359
(87) International publication number: WO 2015/138845

(56) References cited:
- JP-A- 2005 323 909
- US-A- 2 464 147
- US-A- 3 870 863
- US-A- 4 216 372
- US-A- 6 105 486
- US-A1- 2005 204 927
- US-B1- 6 297 477
- 'Nichrome Wire and Ribbon - Filament', [Online] 06 January 2014, XP055358192 Retrieved from the Internet: <URL:HTTP://WWW.SISWEB.COM/MS/WIRENICHROMEN ICKECHROMIUM.HTM> [retrieved on 2015-05-19]

## Description

### BACKGROUND

This invention relates generally to a toaster, and more particularly to a toaster structure for rapid toasting.

A toaster typically includes a housing that has at least one slot configured to receive a slice of bread or other food product to be toasted. A basket is disposed underneath each slot to retain the food product. When the toaster is activated, typically by depressing a vertical slider button, the food product is lowered within the basket into a heating box. In at least some known toasters, the heating box is located within about 6.35 mm (0.25 in.) of a base of the toaster to minimize a vertical profile of the toaster.

Within the heating box, heating units disposed on each side of the basket apply heat to the respective sides of the food product. At least some known toaster heating units utilize a filament wrapped around a heat-resistant board, wherein the filament radiates heat at infrared wavelengths when a current is applied to it. Typically, a control circuit determines the length of the heating operation based on a user control setting.

Satisfactory toasting of bread and other food products involves removing moisture from the food product. Because fresh bread and other fresh food products often contain a significant amount of moisture, satisfactory toasting traditionally has required several minutes of heating. Efforts to decrease the required heating time have been limited by several factors. For example, at least some known toaster heater units use iron-chromium filaments. However, iron-chromium tends to radiate in a portion of the infrared spectrum that is relatively inefficient at transferring energy to the food product.

Another factor is that in at least some known toasters, heat dissipates from the outside edges of the heating box more quickly than from the center. Thus, with regard to baskets adjacent to the outer wall of the toaster, the side of the food product facing the outer wall tends to brown more slowly than the side of the food product facing the interior of the toaster. This problem is exacerbated when the radiated power is increased in an attempt to speed the toasting process.

In addition, known attempts to decrease the time needed for satisfactory toasting have been limited by the fact that moisture released from the food product, in the form of water vapor (i.e. steam), absorbs a portion of the infrared radiation emanating from the heating unit throughout the toasting process. If more power is applied to the heating unit in an attempt to speed the toasting process, correspondingly more steam is generated early in the process, thus absorbing more of the infrared radiation output from the heating unit and extending the process again.

There is a need, therefore, for an improved toaster that provides relatively rapid toasting of bread or other food products.

US 3 879 863 A discloses a heating element for bread toasters having a support on which a heating conductor is arranged in a plurality of loops.

US 6 105 486 A discloses a low cost toaster having a metal body and plastic end panels. The end panels have cooling inlet vents near their lower ends and the top wall of the metal body has air outlet vents. Ambient air admitted through the inlet vents flows upwardly through the toaster and outwardly through the outlet vents to provide a cooling effect sufficient to allow the use of inexpensive plastic material for molding the end panels.

### SUMMARY

The invention is defined by the appended independent claims, and preferred aspects of the invention are defined by the appended dependent claims. In an exemplary implementation, a rapid-toasting toaster is provided. The toaster includes a housing having at least one slot configured to receive the food product and a heating box disposed within said housing. The heating box includes at least one basket disposed generally underneath the at least one slot and a heating unit disposed adjacent the at least one basket. The basket is configured to retain the food product and the heating unit is configured to radiate heat from a side facing the at least one basket. A filament is supported by the heating unit. The filament includes a wire having a resistance rating less than about 12 ohms/m and is configured in a pattern including at least two windings that are spaced apart a distance less than about 6 mm.

In an exemplary implementation, a rapid-toasting toaster is provided. The toaster includes a housing having a slot for receiving the food product, an upper portion having at least one upper housing vent extending therethrough, and a base coupled to the housing. The base includes at least one base vent extending therethrough. A heating box is disposed within the housing. The heating box is defined by a plurality of sides coupled to a bottom plate. The heating box includes a basket disposed generally underneath the slot and at least one heating unit disposed adjacent to the basket. The basket is configured to retain the food product. A plurality of apertures is defined in the plurality of sides. The heating box is coupled to the base such that a cavity is defined between the bottom plate and the base. The at least one base vent, the cavity, the plurality of apertures, and the at least one upper housing vent are coupled in flow communication.

In an exemplary implementation, a method of assembling a rapid-toasting toaster is provided. The method includes coupling a housing to a base. The housing includes at least one housing vent extending therethrough and a plurality of slots each configured to receive the food product. The base includes at least one base vent extending therethrough. A plurality of sides are coupled to a bottom plate to define a heating box. The plurality of sides define a plurality of apertures. The heating box includes a plurality of baskets configured to retain the food product and disposed generally underneath each slot of the plurality of slots. An inner filament is wrapped around an inner heating unit in a pattern including at least two windings that are spaced apart a distance less than about 6 mm. The inner heating unit is coupled to the bottom plate between a pair of baskets of the plurality of baskets. The inner heating unit is configured to radiate heat at a first wattage from each of a first side and a second side. An outer filament is wrapped around an outer heating unit in a pattern including at least two windings that are spaced apart a distance less than about 6 mm. The outer heating unit is coupled to the bottom plate adjacent one basket of the pair of baskets opposite the inner heating unit. The outer heating unit is configured to radiate heat at a second wattage from a side facing the basket. The second wattage is greater than the first wattage.

### BRIEF DESCRIPTION

Figure 1 is a first perspective view of one embodiment of a toaster;
Figure 2 is a second perspective view of the toaster of Figure 1;
Figure 3 is a perspective of one embodiment of a heating box that can be used in the toaster of Figures 1 and 2;
Figures 4A and 4B are schematic views of a first embodiment of an outer heating unit and an inner heating unit, respectively, that can be used with the heating box of Figure 3;
Figures 5A and 5B are schematic views of a second embodiment of an outer heating unit and an inner heating unit, respectively, that can be used with the heating box of Figure 3;
Figures 6A and 6B are schematic views of a third embodiment of an outer heating unit and an inner heating unit, respectively, that can be used with the heating box of Figure 3;
Figure 7 is a cut-away perspective view of the toaster of Figures 1 and 2 with the heating box of Figure 3 installed;
Figure 8 is a perspective view of an interior portion of the toaster of Figures 1 and 2; and
Figure 9 is a bar graph illustrating the results of benchmark testing of the toaster of Figures 1 and 2 with the heating box of Figure 3 installed.

Corresponding reference characters indicate corresponding parts throughout the several views of the drawings.

### DETAILED DESCRIPTION

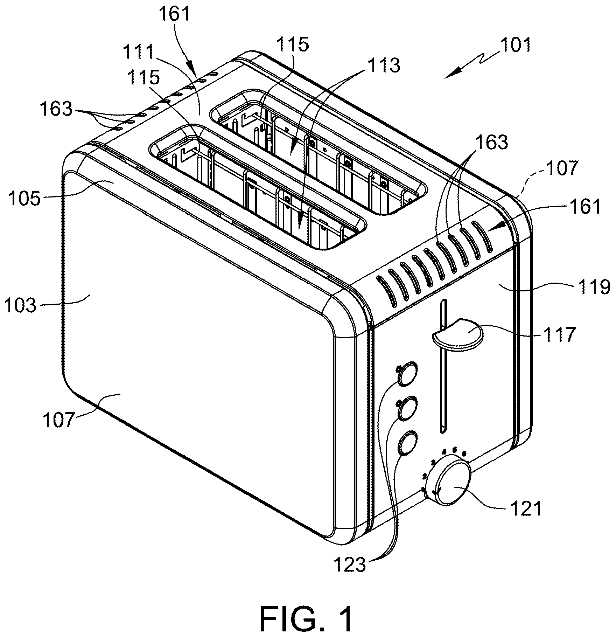

Referring now to the drawings and in particular to Figure 1, a rapid-toasting toaster according to one embodiment of the present disclosure is generally designated 101. The toaster 101 generally comprises a housing 103 having an upper housing portion 105 and two generally oppositely disposed side surfaces 107. A plurality of slots 113 is located on a top surface 111 of the upper housing portion 105. Each slot 113 is configured to receive a slice of bread or other food product (not shown) to be toasted. While two slots 113 are shown in the embodiment illustrated in Figure 1, it should be understood that in alternative embodiments, the toaster 101 may have one, three, four, or any suitable number of slots 113.

A basket 115 is disposed generally underneath each slot 113 within housing 103. Each basket 115 is configured to receive the food product through the corresponding slot 113 and retain the received food product in position during the toasting process. In addition, a vertical slider button 117 is disposed on a front surface 119 of the housing 103. The button 117 is operably coupled to each basket 115 in conventional fashion. More specifically, when the button 117 is depressed, the received food product (not shown) is lowered within each basket 115 such that substantially all of the received food product is disposed within the housing 103. The button 117 may be coupled to the baskets 115 in any suitable fashion. In alternative embodiments, any suitable control may be used to lower the received food product within each basket 115.

In the illustrated embodiment, a browning control selector 121 and a plurality of user buttons 123 also are disposed on front surface 119. The browning control selector 121 is configured in conventional fashion to enable a user to select a desired degree of toasting to be performed. The user buttons 123 are configured in conventional fashion to allow the user to control other toaster functions, for example, identifying a type of food product (e.g. bread, bagel, etc.) to enable optimization of the toasting process, popping the food product within each basket 115 up through the corresponding slot 113 and manually ending the toasting process, etc. In alternative embodiments, the toaster 101 may have a plurality of vertical slider buttons 117, browning control selectors 121, and sets of user buttons 123 each associated with a subset of the slots 113.

At least one vent 161 is disposed on the upper housing portion 105 of the toaster 101. In the illustrated embodiment, a vent 161 is disposed near each respective opposite end of the top surface 111 of the housing 103. Each vent 161 comprises a plurality of elongated openings 163 extending through the housing 103. The vents 161 facilitate air circulation through the interior of the housing 103, as will be described in more detail below.

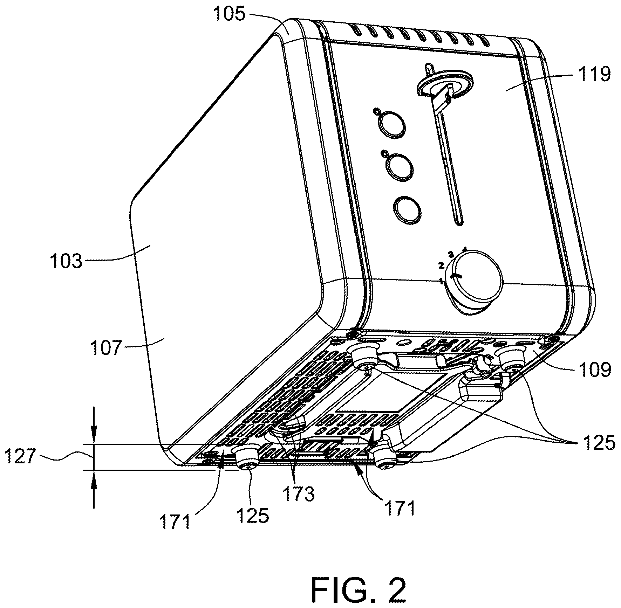

Referring now in particular to Figure 2, the housing 103 is coupled to a base 109. The base 109 includes a plurality of legs 125 configured to support the toaster 101 on a countertop or other suitable generally smooth surface (not shown). The legs 125 each have a length 127 that is sufficiently long such that a gap exists between the base 109 and the generally smooth surface upon which the legs 125 rest. Moreover, at least one vent 171 is disposed on the base 109. In the illustrated embodiment, a plurality of vents 171 are disposed on the base 109. Each vent 171 comprises a plurality of elongated openings 173 extending through the base 109. The base vents 171 cooperate with the upper housing vents 161 to facilitate air circulation through the interior of the housing 103, as will be described in more detail below.

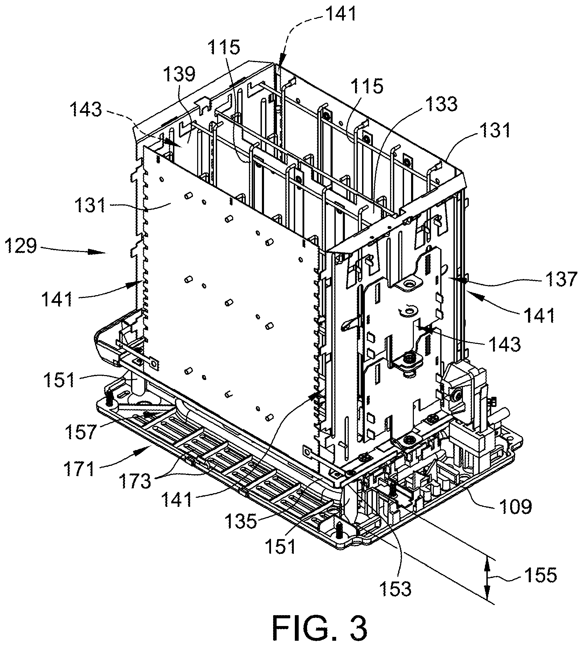

Figure 3 illustrates an embodiment of the interior of the toaster 101 with housing 103 removed. A heating box 129 is defined by two outer heating units 131, a bottom plate 135, a front plate 137, and a back plate 139. Each outer heating unit 131 is coupled to the bottom plate 135 using any suitable fasteners. Each outer heating unit 131 comprises a board formed from a suitably heat-resistant material, such as mica, with a pattern of wire filament disposed on at least one side of the board. In Figure 3, the wire filaments are omitted for ease of viewing. Additionally or alternatively, each outer heating unit 131 may be coupled to at least one of the front plate 137 and the back plate 139.

In the illustrated embodiment, the two outer heating units 131, the bottom plate 135, the front plate 137, and the back plate 139 are configured such that the side surfaces of the heating box 129 are not sealed. More specifically, apertures 141 are present between each outer heating unit 131 and the front plate 137, and between each outer heating unit 131 and the back plate 139. Additionally or alternatively, apertures 143 are defined in the front plate 137 and the back plate 139.

In the illustrated embodiment, the heating box 129 is coupled to the base 109 of the toaster 101. More specifically, a plurality of posts 151 extend upward from the base 109 and couple to the bottom plate 135 of the heating box 129. Each post 151 is coupled to the base 109 and to the bottom plate 135 using a suitable fastening structure. A washer 153 formed from a suitable insulating material, such as, but not limited to, mica, is disposed between each post 151 and the bottom plate 135 to facilitate insulating the heating box 129 from the base 109.

In the illustrated embodiment, a length 155 of the posts 151 is extended beyond a minimum length required for insulation purposes. Due to the extended length 155, a cavity 157 is defined between the bottom plate 135 and the base 109. The cavity 157 facilitates airflow through the interior of the housing 103, as will be described in more detail herein. In one embodiment, the length 155 is at least 12.7 mm (0.5 in.). In another embodiment, the length 155 is in a range of about 12.7 mm (0.5 in.) to about 15.875 mm (0.625 in.). In another embodiment, the length 155 is about 12.7 mm (0.5 in.).

An inner heating unit 133 is disposed within heating box 129 between the adjacent pair of baskets 115. The inner heating unit 133 is coupled to at least one of the bottom plate 135, the front plate 137, and the back plate 139. The inner heating unit 133 comprises a board formed from a suitably heat-resistant material, such as mica, with a pattern of wire filament disposed on both sides of the board. In Figure 3, the wire filaments are omitted for ease of viewing.

With reference to Figures 1-3, in the illustrated embodiment, the vertical slider button 117 is configured to activate heating units 131 and 133 in conventional fashion when vertical slider button 117 is depressed. Moreover, the browning control selector 121 and the plurality of user buttons 123 are operatively coupled to heating units 131 and 133 in conventional fashion to facilitate controlling a power and duration of the toasting process. For example, the vertical slider button 117, the browning control selector 121, and the plurality of user buttons 123 may be electronically coupled as inputs to one or more printed circuit boards (not shown) disposed in the housing 103, and the printed circuit boards may include one or more control circuits or processors configured to control a power supplied to each of heating units 131 and 133, thereby controlling the power and duration of the toasting process.

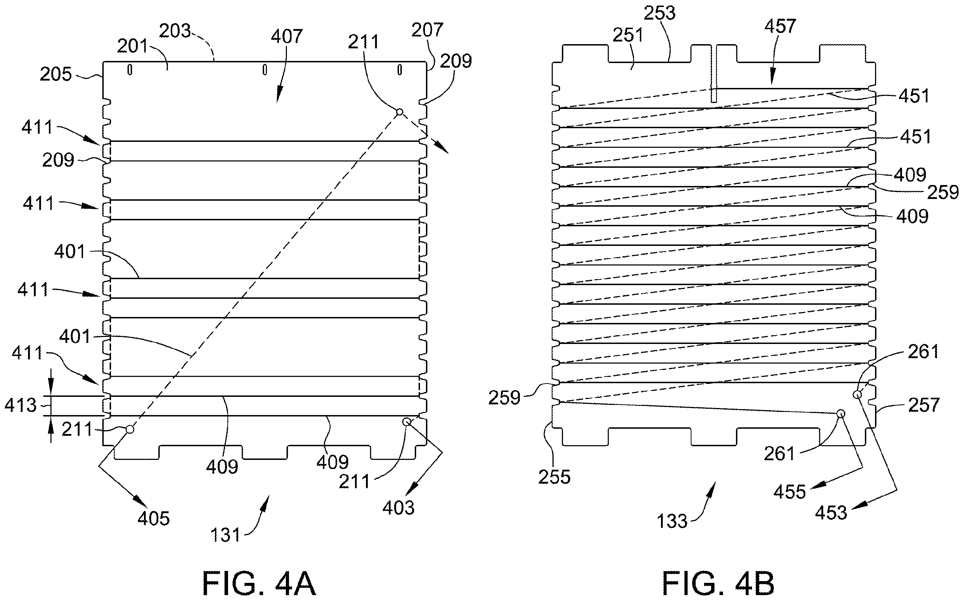

A first embodiment of an outer heating unit 131 and an inner heating unit 133 that can be used as part of the heating box 129 shown in Figure 3 is illustrated in Figures 4A and 4B, respectively. With reference to Figure 4A, each outer heating unit 131 includes a first side 201 and an opposite second side 203. The outer heating unit 131 also includes a first edge 205 and an opposite second edge 207. A plurality of notches 209 is defined on each of the first edge 205 and second edge 207.

A filament 401 is supported by the outer heating unit 131. Portions of the filament 401 that are disposed on the second side 203 of the outer heating unit 131 are illustrated in dashed lines. The filament 401 may be any material suitable for radiating heat to the food product as described herein. For example, the filament 401 may be formed from a 1.4 mm (0.055 in.) width Nichrome wire comprising 60 percent nickel ("N60 wire") rated at 6.7 ohms/m (2.04 ohms/ft.). The N60 wire may have a thickness of approximately 0.1 mm (0.004 in.). When a suitable wattage is applied to it, N60 wire radiates in a portion of the infrared spectrum that is relatively efficient at transferring heat energy to the food product, as compared to other known filament materials such as iron-chromium. Preferably, the filament 401 is capable of operating at a relatively high temperature. For example, the N60 wire has a maximum continuous operating temperature of 1,150 degrees Celsius (2,102 degrees Fahrenheit). In alternative embodiments, however, the filament 401 may have a different width, thickness, and/or resistance rating and may be formed from iron-chromium, Nichrome wire comprising 80 percent nickel, or another suitable material that radiates heat when a suitable wattage is applied. A first end 403 and a second end 405 of the filament 401 are configured for coupling to an electrical circuit that supplies power to the filament 401 when the toaster 101 is activated, as described above.

Only the first side 201 of each outer heating unit 131 is configured to face a respective one of the baskets 115. Accordingly, the filament 401 is wrapped around the outer heating unit 131 such that substantially all of the filament 401 is disposed on the first side 201. The notches 209 and a plurality of through-holes 211 facilitate retaining the filament 401 in a desired pattern 407 on the outer heating unit 131. In addition, a plurality of thin, heat-resistant strips, such as mica strips (not shown), may be coupled to the first side 201 after the filament 401 is wrapped to facilitate retaining the filament 401 in the desired pattern 407.

With reference to Figure 4B, the inner heating unit 133 includes a first side 251 and an opposite second side 253. The inner heating unit 133 also includes a first edge 255 and an opposite second edge 257. A plurality of notches 259 is defined on each of the first edge 255 and second edge 257.

A filament 451 is supported by the inner heating unit 133. Portions of the filament 451 that are disposed on the second side 253 of the inner heating unit 133 are illustrated in dashed lines. The filament 451 may be formed from a 1.4 mm (0.055 in.) width Nichrome wire comprising 60 percent nickel ("N60 wire") rated at 5.88 ohms/m (1.79 ohms/ft.), for example. The N60 wire may have a thickness of approximately 0.13 mm (0.005 in.). In alternative embodiments, the filament 451 may have a different width, thickness and/or resistance rating and may be formed from iron-chromium, Nichrome wire comprising 80 percent nickel, or another suitable material. A first end 453 and a second end 455 of the filament 451 are configured for coupling to an electrical circuit that supplies power to the filament 451 when the toaster 101 is activated, as described above.

Both the first side 251 and the second side 253 of the inner heating unit 133 are configured to face a respective one of the baskets 115. Accordingly, the filament 451 is wrapped around the inner heating unit 133 such that a substantially equal extent of the filament 451 is disposed on each of the first side 251 and the second side 253. The notches 259 and a plurality of through-holes 261 facilitate retaining the filament 451 in a desired pattern 457 on the inner heating unit 133. In addition, a plurality of thin, heat-resistant strips, such as mica strips (not shown), may be coupled to each of the first side 251 and the second side 253 after the filament 451 is wrapped to facilitate retaining the filament 451 in the desired pattern 457.

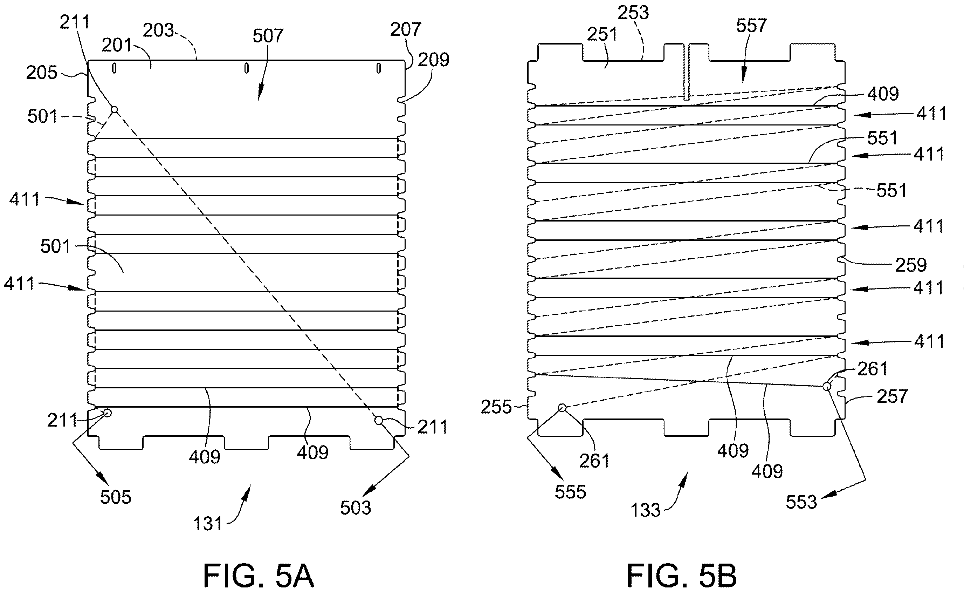

A second embodiment of an outer heating unit 131 and an inner heating unit 133 that can be used as part of the heating box 129 shown in Figure 3 is illustrated in Figures 5A and 5B, respectively. With reference to Figure 5A, each outer heating unit 131 again includes the first side 201, second side 203, first edge 205, second edge 207, and plurality of notches 209 defined on each of first edge 205 and second edge 207. A filament 501 is supported by each outer heating unit 131. Portions of the filament 501 that are disposed on the second side 203 of the outer heating unit 131 are illustrated in dashed lines. The filament 501 may be formed from a 1.4 mm (0.055 in.) width Nichrome wire comprising 60 percent nickel ("N60 wire") rated at 6.7 ohms/m (2.04 ohms/ft.), for example. The N60 wire may have a thickness of approximately 0.1 mm (0.004 in.). In alternative embodiments, the filament 501 may have a different width, thickness, and/or resistance rating and may be formed from iron-chromium, Nichrome wire comprising 80 percent nickel, or another suitable material. A first end 503 and a second end 505 of the filament 501 are configured for coupling to an electrical circuit that supplies power to the filament 501 when the toaster 101 is activated, as described above.

The filament 501 is wrapped around the outer heating unit 131 such that substantially all of the filament 501 is disposed on the first side 201. The notches 209 and the plurality of through-holes 211 facilitate retaining the filament 501 in a desired pattern 507 on the outer heating unit 131. In addition, a plurality of thin, heat-resistant strips, such as mica strips (not shown), may be coupled to the first side 201 after the filament 501 is wrapped to facilitate retaining the filament 501 in the desired pattern 507.

With reference to Figure 5B, the inner heating unit 133 again includes the first side 251, second side 253, first edge 255, second edge 257, and plurality of notches 259 defined on each of first edge 255 and second edge 257. A filament 551 is supported by the inner heating unit 133. Portions of the filament 551 that are disposed on the second side 253 of the inner heating unit 133 are illustrated in dashed lines. The filament 551 may be formed from a 1.4 mm (0.055 in.) width Nichrome wire comprising 60 percent nickel ("N60 wire") rated at 5.88 ohms/m (1.79 ohms/ft.), for example. The N60 wire may have a thickness of approximately 0.13 mm (0.005 in.). In alternative embodiments, the filament 551 may have a different width, thickness, and/or resistance rating and may be formed from iron-chromium, Nichrome wire comprising 80 percent nickel, or another suitable material. A first end 553 and a second end 555 of the filament 551 are configured for coupling to an electrical circuit that supplies power to the filament 551 when the toaster 101 is activated, as described above.

The filament 551 is wrapped around the inner heating unit 133 such that a substantially equal extent of the filament 551 is disposed on each of the first side 251 and the second side 253. The notches 259 and the plurality of through-holes 261 facilitate retaining the filament 551 in a desired pattern 557 on the inner heating unit 133. In addition, a plurality of thin, heat-resistant strips, such as mica strips (not shown), may be coupled to each of the first side 251 and the second side 253 after the filament 551 is wrapped to facilitate retaining the filament 551 in the desired pattern 557.

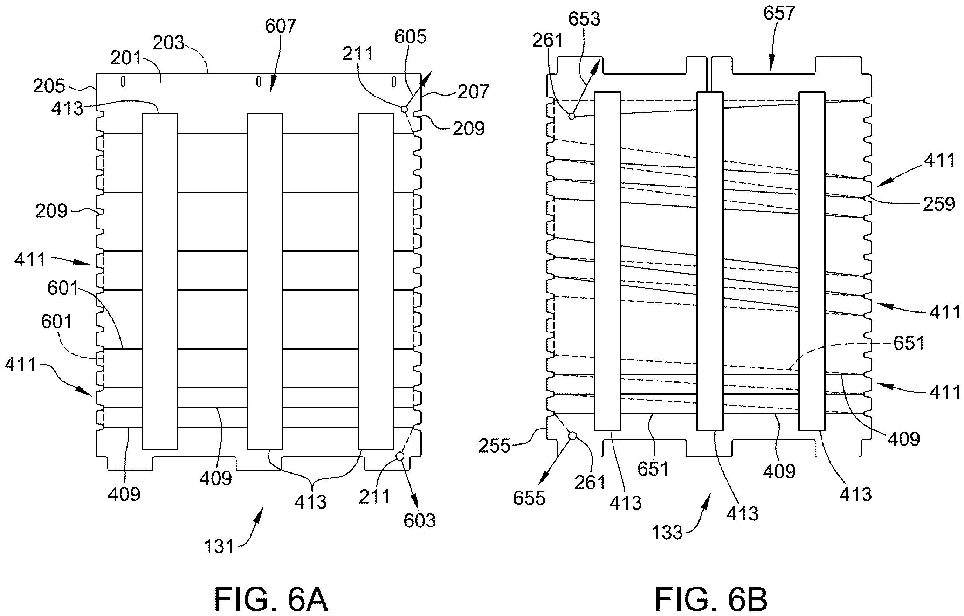

A third embodiment of an outer heating unit 131 and an inner heating unit 133 that can be used as part of the heating box 129 shown in Figure 3 is illustrated in Figures 6A and 6B, respectively. With reference to Figure 6A, each outer heating unit 131 again includes the first side 201, second side 203, first edge 205, second edge 207, and plurality of notches 209 defined on each of first edge 205 and second edge 207. A filament 601 is supported by each outer heating unit 131. Portions of the filament 601 that are disposed on the second side 203 of the outer heating unit 131 are illustrated in dashed lines. The filament 601 may be formed from a 0.8 mm (0.03125 in.) width Nichrome wire comprising 60 percent nickel ("N60 wire") rated at 11.86 ohms/m (3.615 ohms/ft.), for example. The N60 wire may have a thickness of approximately 0.127 mm (0.0050 in.). In alternative embodiments, the filament 601 may have a different width, thickness, and/or resistance rating and may be formed from iron-chromium, Nichrome wire comprising 80 percent nickel, or another suitable material. A first end 603 and a second end 605 of the filament 601 are configured for coupling to an electrical circuit that supplies power to the filament 601 when the toaster 101 is activated, as described above.

The filament 601 is wrapped around the outer heating unit 131 such that substantially all of the filament 601 is disposed on the first side 201. The notches 209 and the plurality of through-holes 211 facilitate retaining the filament 601 in a desired pattern 607 on the outer heating unit 131. In addition, a plurality of thin, heat-resistant strips 413, such as mica strips, may be coupled to the first side 201 after the filament 601 is wrapped to facilitate retaining the filament 601 in the desired pattern 607.

With reference to Figure 6B, the inner heating unit 133 again includes the first side 251, second side 253, first edge 255, second edge 257, and plurality of notches 259 defined on each of the first edge 255 and second edge 257. A filament 651 is supported by the inner heating unit 133. Portions of the filament 651 that are disposed on the second side 253 of the inner heating unit 133 are illustrated in dashed lines. The filament 651 may be formed from a 1.6 mm (0.0625 in.) width Nichrome wire comprising 60 percent nickel ("N60 wire") rated at 6.7 ohms/m (2.0617 ohms/ft.), for example. The N60 wire may have a thickness of approximately 0.13 mm (0.005 in.). In alternative embodiments, the filament 651 may have a different width, thickness, and/or resistance rating and may be formed from iron-chromium, Nichrome wire comprising 80 percent nickel, or another suitable material. A first end 653 and a second end 655 of the filament 651 are configured for coupling to an electrical circuit that supplies power to the filament 651 when the toaster 101 is activated, as described above.

The filament 651 is wrapped around the inner heating unit 133 such that a substantially equal extent of the filament 651 is disposed on each of the first side 251 and the second side 253. The notches 259 and the plurality of through-holes 261 facilitate retaining the filament 651 in a desired pattern 657 on the inner heating unit 133. In addition, a plurality of thin, heat-resistant strips 413, such as mica strips, may be coupled to each of the first side 251 and the second side 253 after the filament 651 is wrapped to facilitate retaining the filament 651 in the desired pattern 657.

For each of the filament-wrapping embodiments illustrated in Figures 4-6, and with reference also to Figure 3, the toaster 101 is configured such that a higher wattage is applied by the first side 201 of each of the outer heating units 131 than by either of the two sides 251 and 253 of the inner heating unit 133. For example, toaster 101 is configured to apply about 1200 total watts of heating power, with each of the two outer heating units 131 configured to provide about 360 watts of that total, and the inner heating unit 133 configured to provide about 480 watts of that total (that is, about 240 watts on each side). In other words, about 60 percent of the total wattage supplied by the toaster 101 is directed to the outer heating units 131. Because the first side 201 of the outer heating unit 131 facing a particular basket 115 supplies 360 watts, or about 150 percent more than the 240 watts applied by the corresponding first side 251 or second side 253 of the inner heating unit 133 facing that particular basket 115, the toaster 101 facilitates even browning of both sides of the food product in the basket 115 despite a tendency for heat to dissipate more quickly from the outside region of the heating box 129 than from the interior.

In certain embodiments, the application of the desired wattages by each of the outer heating units 131 and the inner heating unit 133 may be facilitated by splitting the voltage supplied to at least one heating unit. For example, if the toaster 101 is configured to be electrically coupled to a 120 volt power outlet, the two outer heating units 131 can be electrically configured to split the 120 volts, while the inner heating unit 133 can be configured to utilize the full 120 volts.

Alternatively, in certain embodiments, the application of the desired wattages by each of the outer heating units 131 and the inner heating unit 133 may be facilitated by wiring each of the heating units together in series. For example, for the embodiment illustrated in Figure 6, the filament 651 wrapped around the inner heating unit 133 may be wired in series with each of the filaments 601 wrapped around the respective two outer heating units 131. In certain other embodiments, the filaments wrapped around each of the outer heating units 131 and the inner heating unit 133 are not wired in series.

The heat radiated by each of the outer heating units 131 and the inner heating units 133 at a specified wattage is determined, at least in part, by the respective filaments 401, 451, 501, 551, 601, 651 and the patterns 407, 457, 507, 557, 607, 657. Suitably, the filaments 401, 451, 501, 551, 601, 651 are wrapped around the respective heating units 131, 133 in the patterns 407, 457, 507, 557, 607, 657 such that a space 408 between adjacent windings 409 is minimized. The space 408 facilitates the filaments 401, 451, 501, 551, 601, 651 radiating a greater amount of heat without the windings 409 unsafely contacting each other. As the space 408 between the adjacent windings 409 decreases, the heat radiated by the filaments 401, 451, 501, 551, 601, 651 increases. Preferably, some consecutive windings 409 are spaced apart between about 5 mm (0.20 in.) and about 7 mm (0.28 in.). More preferably, some consecutive windings 409 in each of the patterns 407, 457, 507, 557, 607, 657 are spaced apart approximately 5.5 mm (0.22 in.). In alternative embodiments, the space 408 may be any suitable distance.

In suitable embodiments, the spacing between windings 409 may be uniform or varied throughout the patterns 407, 457, 507, 557, 607, 657. For example, adjacent windings 409 may be configured in a plurality of groups 411 such that adjacent windings in each group are separated by the space 408. The windings 409 in each group 411 may be spaced from the windings in other groups a distance that is greater than the space 408 between the adjacent windings, such as shown in Figures 4A and 5A-6B. Therefore, the groups 411 facilitate some of the windings 409 having a minimal distance between each other when a limited number of the windings are included in the patterns 407, 507, 557, 607, 657. Alternately, the windings 409 may be uniformly spaced throughout the pattern 457, such as shown in Figure 4B, to facilitate all of the windings being separated by the minimal space 408 when the pattern has a maximum number of the windings.

Additionally, the heat that the outer heating units 131 and the inner heating unit 133 radiate is determined, at least in part, by the number of the windings 409 in the patterns 407, 457, 507, 557, 607, 657. The number of the windings 409 affects the average operating temperature of the filaments, which is directly proportional to the infrared head radiated by the filaments. Therefore, the heat each filament 401, 451, 501, 551, 601, 651 will radiate will increase as the number of the windings 409 increases. Preferably, the patterns 457, 557, 657 of the inner heating units 133 have between about 8 of the windings 409 and about 20 of the windings and the patterns 407, 507, 607 of the outer heating units 131 have between about 6 of the windings and about 16 of the windings. In the example embodiments, the pattern 407 has 10 of the windings 409, the pattern 457 has 16 of the windings, the pattern 507 has 14 of the windings, the pattern 557 has 11 of the windings, the pattern 607 has 8 of the windings, and the pattern 657 has 10 of the windings. In alternate embodiments, the filaments 401, 451, 501, 551, 601, 651 may be configured in patterns having any number of the windings 409. Preferably, the number of the windings 409 is sufficient for the filaments 401, 501, 601 to each have a resistance value between about 9 ohms and about 14 ohms and the filaments 451, 551, 651 to each have a resistance value between about 15 ohms and about 28 ohms.

Thus, with reference to Figures 1-6, each basket 115 is disposed between a pair of heating units configured to apply heat at a specified wattage to oppositely disposed sides of the received food product in the basket 115. In alternative embodiments where the toaster 101 includes more than two baskets 115, an inner heating unit 133 may be disposed between each adjacent pair of baskets 115. In another alternative embodiment where the toaster 101 includes a single basket 115, the inner heating unit 133 is omitted.

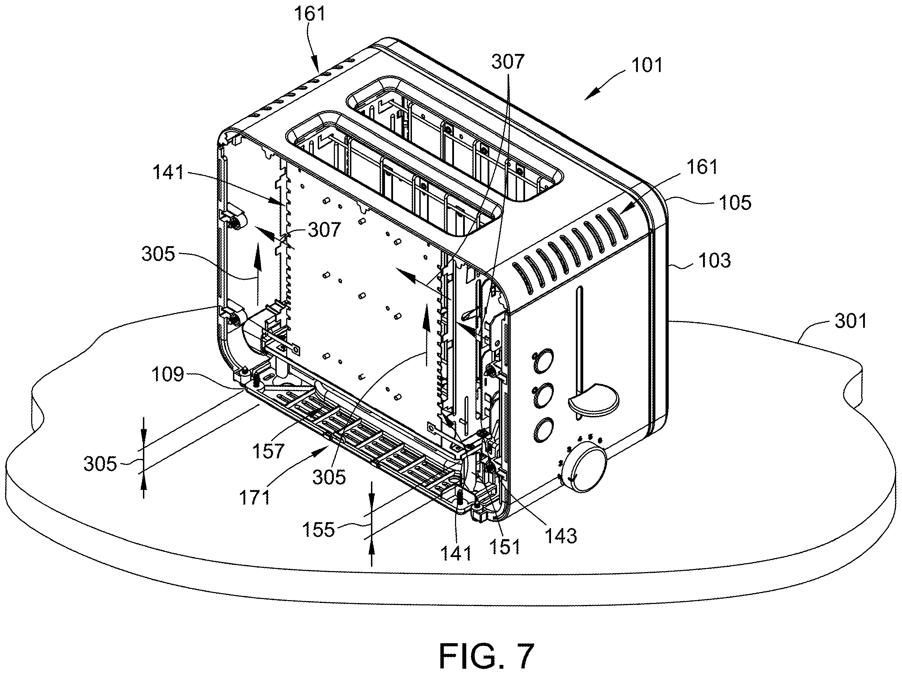

With reference to Figure 7, the base vents 171, cavity 157, and upper housing vents 161 are coupled in flow communication to define an airflow path 305 through the interior of the housing 103. The airflow path 305 is external to the heating box 129. Notably, however, the apertures 141 and 143 defined through the sides of the heating box 129 also are in flow communication with the airflow path 305.

With reference to Figures 1-3 and Figure 7, the air flow through the interior of the housing 103 during operation of the toaster 101 will now be described. The toaster 101 is located on a smooth surface 301. A gap 303 between the base 109 and the surface 301 is established by the length 127 of the legs 125 (shown in Figure 2) upon which the toaster 101 is supported.

Air heated by the operation of the outer heating units 131 and the inner heating unit 133 rises due to natural buoyancy. A portion of the heat generated by the heating units heats air within the housing 103 that is exterior to the heating box 129, including the air within the cavity 157 beneath the bottom plate 135, and this air tends to rise toward, and to exit through, the upper housing vents 161.

The exit of heated air from the upper housing vents 161 draws a flow of ambient air into housing 103 through vents 171 disposed in the base 109, facilitated by the gap 303. The ambient air is heated in turn, causing it to flow toward the upper housing vents 161, continuing the flow cycle. Thus, the cavity 157 established by the extended length 155 of the posts 151 facilitates the formation of a steady, well-distributed air flow in airflow path 305 around the exterior of the heating box 129.

The airflow 305 draws air 307 out of the interior of the heating box 129 through the apertures 141 and 143. The heating box air 307 includes steam released from the food product in the baskets 115 during the toasting process. Because steam absorbs significant amounts of infrared radiation, the drawing of air 307 out of the heating box 129 through the external airflow path 305 enables a larger proportion of the heat generated by the outer heating units 131 and the inner heating unit 133 to reach the food product, thereby facilitating a decreased time required for satisfactory toasting.

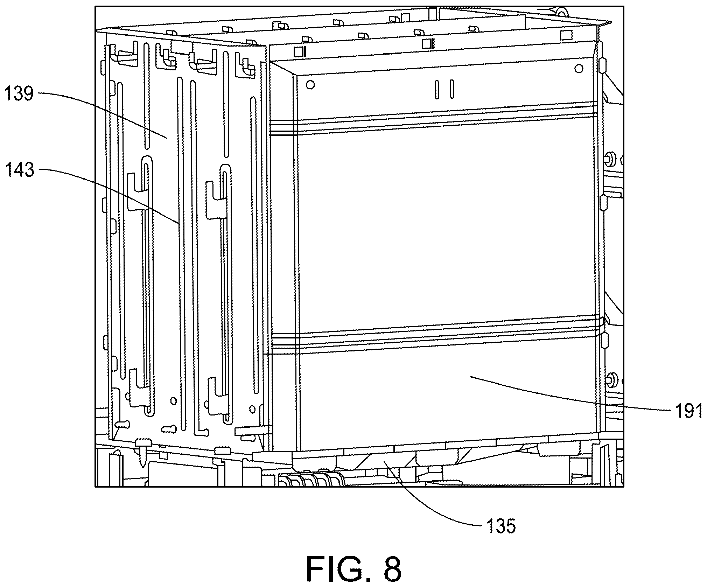

To minimize the airflow 305 around the outer heating units 131, a cover 191 can extend on the exterior of the outer heating units as seen in Figure 8. The cover 191 facilitates the outer heating units reaching higher operating temperatures. Preferably, the cover 191 extends substantially the entire distance between the upper housing portion 105 and the bottom plate 135.

Benchmark testing of an embodiment of the toaster 101 was performed. Trials were used to establish the time required for conventional 1200-watt toasters, as well as the toaster 101 configured to apply 1200 watts, to reach 60 percent of a maximum browning standard. The browning standard was quantified by photographing toasted white bread and evaluating the number of browned pixels in the photographs.

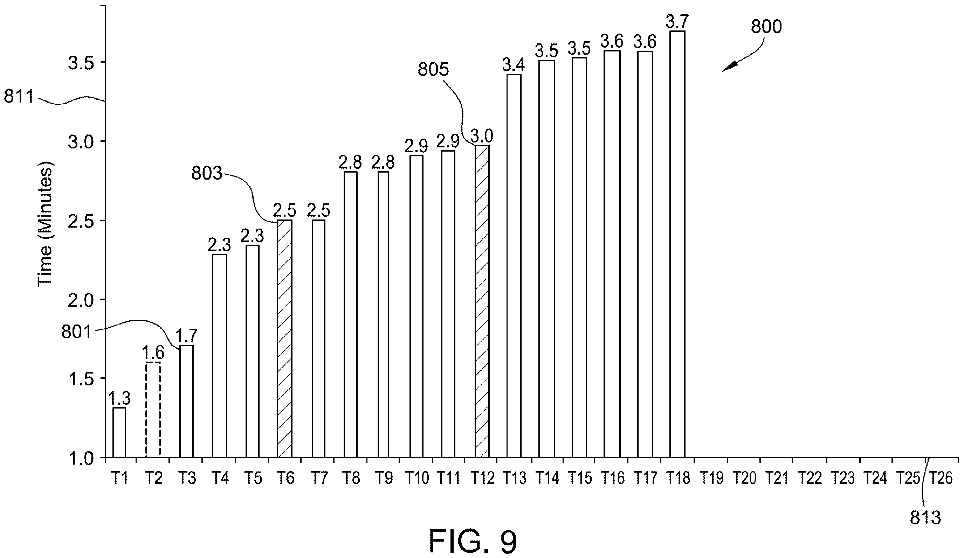

The results of the benchmark testing are illustrated in bar graph 800 shown in Figure 9. In bar graph 800, axis 811 represents time in minutes to achieve the browning standard, while axis 813 is a list of brand names of conventional toasters. Toaster 101 is embodied by a modified Black and Decker TR1256B, as identified at 801. The conventional toasters most comparable to the toaster 101 required from about 2.5 minutes to about 3 minutes to achieve the standard, as illustrated by bars 803 and 805, while the toaster 101 required only about 1.7 minutes to achieve the same standard, as illustrated by bar 801. This results in a speed increase of from 32 to 43 percent over conventional toasters.

When introducing elements of the present invention or the preferred embodiment(s) thereof, the articles "a", "an", "the", and "said" are intended to mean that there are one or more of the elements. The terms "comprising", "including", and "having" are intended to be inclusive and mean that there may be additional elements other than the listed elements.

As various changes could be made in the above constructions without departing from the scope of the invention, it is intended that all matter contained in the above description or shown in the accompanying drawings shall be interpreted as illustrative and not in a limiting sense.

## Claims

1. A rapid-toasting toaster for toasting a food product, said toaster comprising:
a housing (103) comprising:
an upper housing portion (105) having a slot located on a top surface (111) of the upper housing portion (105) for receiving the food product
a base (109) coupled to said housing (103), and
a heating box (129) disposed within said housing (103), said heating box being defined by a plurality of sides (131, 137, 139) coupled to a bottom plate (135), said heating box comprising:
a basket (115) disposed underneath said slot (113), said basket configured to retain the food product; and
at least one heating unit (131, 133) disposed adjacent to said basket,
**characterized by** the upper housing portion (105) also comprising at least one upper housing vent (161) extending through the upper housing portion (105), said base (109) also comprising at least one base vent (171) extending through the base (109), and wherein the heating box (129) also comprises a plurality of apertures (141) defined in said plurality of sides (131, 137, 139), wherein said heating box (129) is coupled to said base by posts (151) such that a cavity (157) is defined between said bottom plate (135) and said base (109), and wherein said at least one base vent (171), said cavity (157), said plurality of apertures (141), and said at least one upper housing vent (161) are coupled in flow communication.

2. The toaster as set forth in claim 1 further comprising a plurality of legs (125) coupled to said base (109) to support said toaster on a surface, said legs (125) configured such that a gap exists between said base (109) and the surface upon which said legs (125) rest.

3. The toaster as set forth in claim 1 wherein said at least one base vent (171) comprises a plurality of base vents (171), each base vent comprising a plurality of elongate openings (173).

4. The toaster as set forth in claim 1 wherein said at least one upper housing vent (161) comprises a plurality of upper housing vents, at least one upper housing vent of said plurality of upper housing vents disposed near a first end of said top surface of said housing and another upper housing vent of said plurality of upper housing vents disposed near an opposite second end of said top surface of said housing (103).

5. The toaster as set forth in claim 4 wherein each upper housing vent of said plurality of upper housing vents (161) comprises a plurality of elongate openings (163) extending through the housing (103).

6. A method of assembling a rapid-toasting toaster for toasting a food product, said method comprising:
coupling a housing (103) to a base (109), the housing including at least one housing vent (161) extending therethrough and having a plurality of slots each configured to receive the food product, the base comprising at least one base vent (171) extending therethrough;
coupling a plurality of sides (131, 137, 139) to a bottom plate (135) to define a heating box (129), the plurality of sides (131, 137, 139) defining a plurality of apertures (141), the heating box (129) including a plurality of baskets (115) configured to retain the food product and disposed underneath each slot of the plurality of slots (113);
coupling an inner heating unit (133) to the bottom plate (135) between a pair of baskets of the plurality of baskets (115), the inner heating unit is configured to radiate heat at a first wattage from each of a first side and a second side;
coupling an outer heating unit (131) to the bottom plate adjacent one basket (115) of the pair of baskets (115) opposite the inner heating unit (133), the outer heating unit (131) is configured to radiate heat at a second wattage from a side facing the basket, the second wattage being greater than the first wattage; and
coupling the heating box to the base by posts (151) such that a cavity (157) is defined between the bottom plate (135) and the base (109), and wherein the at least one base vent (171), the cavity (157), the plurality of apertures (141), and the at least one housing vent (161) are coupled in flow communication.

## Patentansprüche

1. Schnelltoastender Toaster zum Toasten eines Lebensmittelprodukts, wobei der Toaster aufweist :
ein Gehäuse (103), das aufweist:
einen oberen Gehäuseabschnitt (105), der einen auf einer Oberseite (111) des oberen Gehäuseabschnitts (105) angeordneten Schlitz zum Aufnehmen des Lebensmittelprodukts aufweist;
eine Basis (109), die mit dem Gehäuse (103) gekoppelt ist, und
einen Heizkasten (129), der im Gehäuse (103) angeordnet ist, wobei der Heizkasten durch mehrere Seiten (131, 137, 139) definiert ist, die mit einer Bodenplatte (135) gekoppelt sind, wobei der Heizkasten aufweist:
einen Korb (115), der unter dem Schlitz (113) angeordnet ist, wobei der Korb konfiguriert ist, das Lebensmittelprodukt zu halten; und
mindestens eine Heizeinheit (131,133), die benachbart zum Korb angeordnet ist, **dadurch gekennzeichnet, dass** der obere Gehäuseabschnitt (105) außerdem mindestens eine obere Gehäuseentlüftung (161) aufweist, die sich durch den oberen Gehäuseabschnitt (l05) erstreckt, die Basis (109) außerdem mindestens eine Basisentlüftung (171) aufweist, die sich durch die Basis (109) erstreckt, und der Heizkasten (129) außerdem mehrere Öffnungen (141) aufweist, die in den mehreren Seiten (131, 137, 139) definiert sind, wobei der Heizkasten (129) mit der Basis durch Pfosten (151) gekoppelt ist, so dass ein Hohlraum (157) zwischen der Bodenplatte (135) und der Basis (109) definiert ist, und wobei die mindestens eine Basisentlüftung (171), der Hohlraum (157), die mehreren Öffnungen (141) und die mindestens eine obere Gehäuseentlüftung (161) in einer Strömungsverbindung gekoppelt sind.

2. Toaster nach Anspruch 1, der ferner mehrere Füße (125) aufweist, die mit der Basis (109) gekoppelt sind, um den Toaster auf einer Oberfläche zu stützen, wobei die Füße (125) so konfiguriert sind, dass ein Spalt zwischen der Basis (109) und der Oberfläche vorhanden ist, auf der die Füße (125) ruhen.

3. Toaster nach Anspruch 1, wobei die mindestens eine Basisentlüftung (171) mehrere Basisentlüftungen (171) aufweist, wobei jede Basisentlüftung mehrere längliche Öffnungen (173) aufweist.

4. Toaster nach Anspruch 1, wobei die mindestens eine obere Gehäuseentlüftung (161) mehrere obere Gehäuseentlüftungen aufweist, mindestens eine obere Gehäuseentlüftung der mehreren oberen Gehäuseentlüftungen, die nahe einem ersten Ende der Oberseite des Gehäuses angeordnet ist, und eine andere obere Gehäuseentlüftung der mehreren oberen Gehäuseentlüftungen, die nahe einem gegenüberliegenden zweiten Ende der Oberseite des Gehäuses (103) angeordnet ist.

5. Toaster nach Anspruch 4 wobei jede obere Gehäuseentlüftung der mehreren oberen Gehäuseentlüftungen (161) mehrere längliche Öffnungen (163) aufweist, die sich durch das Gehäuse (103) erstrecken.

6. Verfahren zum Montieren eines schnelltoastenden Toasters zum Toasten eines Lebensmittelprodukts, wobei das Verfahren aufweist:
Koppeln eines Gehäuses (103) mit einer Basis (109), wobei das Gehäuse mindestens eine Gehäuseentlüftung (161), die sich dort hindurch erstreckt, und mehrere Schlitze aufweist, die jeweils konfiguriert sind, das Lebensmittelprodukt aufzunehmen, wobei die Basis mindestens eine Basisentlüftung (171) aufweist, die sich dort hindurch erstreckt;
Koppeln von mehreren Seiten (131, 137, 139) mit einer Bodenplatte (135), um einen Heizkasten (129) zu definieren, wobei die mehreren Seiten (131, 137, 139) mehrere Öffnungen (141) definieren, wobei der Heizkasten (129) mehrere Körbe (115) aufweist, die konfiguriert sind, das Lebensmittelprodukt zu halten und unter jedem Schlitz der mehreren Schlitze (113) angeordnet sind;
Koppeln einer inneren Heizeinheit (133) mit der Bodenplatte (135) zwischen einem Paar von Körben der mehreren Körbe (115), wobei die innere Heizeinheit konfiguriert ist, Wärme mit einer ersten Wattleistung von jeweils einer ersten Seite und einer zweiten Seite abzustrahlen;
Koppeln einer äußeren Heizeinheit (131) mit der Bodenplatte benachbart zu einem Korb (115) des Paars der Körbe (115) gegenüber der inneren Heizeinheit (133), wobei die äußere Heizeinheit (131) konfiguriert ist, Wärme mit einer zweiten Wattleistung von einer Seite abzustrahlen, die zum Korb weist, wobei die zweite Wattleistung größer als die erste Wattleistung ist; und
Koppeln des Heizkastens mit der Basis durch Pfosten (151), so dass ein Hohlraum (157) zwischen der Bodenplatte (135) und der Basis (109) definiert wird, und wobei die mindestens eine Basisentlüftung (171), der Hohlraum (157), die mehreren Öffnungen (141) und die mindestens eine Gehäuseentlüftung (161) in einer Strömungsverbindung gekoppelt werden.

## Revendications

1. Grille-pain rapide destiné à griller un article alimentaire, ledit grille-pain comprenant :
un boîtier (103) présentant :
une partie supérieure de boîtier (105) avec une fente formée sur une surface supérieure (111) de ladite partie supérieure de boîtier (105) pour la réception de l'article alimentaire ;
une base (109) raccordée au boîtier (103), et
un corps de chauffe (129) disposé à l'intérieur du boîtier (103), ledit corps de chauffe étant défini par une pluralité de faces (131, 137, 139) raccordées à une plaque inférieure (135), ledit corps de chauffe comprenant :
une hotte (115) disposée en dessous de la fente (113), ladite hotte étant prévue pour maintenir l'article alimentaire ; et
au moins une unité de chauffe (131, 133) adjacente à la hotte,
**caractérisé en ce que** la partie supérieure de boîtier (105) comprend en outre au moins un orifice de ventilation de boîtier supérieur (161) s'étendant dans la partie supérieure de boîtier (105), **en ce que** la base (109) comprend en outre au moins
un orifice de ventilation de base (171) s'étendant dans la base (109), le corps de chauffe (129) comprenant en outre une pluralité d'ouvertures (141) définies dans la pluralité de faces (131, 137, 139), le corps de chauffe (129) étant raccordé par des tiges (151) à la base, de manière à définir une cavité (157) entre la plaque inférieure (135) et la base (109), et ledit au moins un orifice de ventilation de base (171), la cavité (157), la pluralité d'ouvertures (141) et ledit au moins un orifice de ventilation de boîtier supérieur (161) étant en liaison d'écoulement fluidique.

2. Grille-pain selon la revendication 1, comprenant en outre une pluralité de pieds (125) raccordés à la base (109) pour l'appui du grille-pain sur une surface, lesdits pieds (125) étant réalisés de manière à former un espacement entre la base (109) et la surface d'appui des pieds (125).

3. Grille-pain selon la revendication 1, où ledit au moins un orifice de ventilation de base (171) comprend une pluralité d'orifices de ventilation de base (171), chaque orifice de ventilation de base comprenant une pluralité d'ouvertures oblongues (173).

4. Grille-pain selon la revendication 1, où ledit au moins un orifice de ventilation de boîtier supérieur (161) comprend une pluralité d'orifice de ventilation de boîtier supérieur, au moins un orifice de ventilation de boîtier supérieur de ladite pluralité d'orifices de ventilation de boîtier supérieur étant présenté à proximité d'une première extrémité de la surface supérieure du boîtier, et un autre orifice de ventilation de boîtier supérieur de la pluralité d'orifices de ventilation de boîtier supérieur étant présenté à proximité d'une deuxième extrémité opposée de la surface supérieure du boîtier (103).

5. Grille-pain selon la revendication 4, où chaque orifice de ventilation de boîtier supérieur de la pluralité d'orifices de ventilation de boîtier supérieur (161) comprend une pluralité d'ouvertures oblongues (163) s'étendant dans le boîtier (103).

6. Procédé de montage d'un grille-pain rapide destiné à griller un article alimentaire, ledit procédé comprenant :
le raccordement d'un boîtier (103) à une base (109), ledit boîtier comprenant au moins un orifice de ventilation de boîtier (161) ménagé dans celui-ci et une pluralité de fentes prévues chacune pour recevoir l'article alimentaire, la base comprenant au moins un orifice de ventilation de base (171) ménagé dans celle-ci ;
le raccordement d'une pluralité de faces (131, 137, 139) à une plaque inférieure (135) pour définir un corps de chauffe (129), ladite pluralité de faces (131, 137, 139) définissant une pluralité d'ouvertures (141), le corps de chauffe (129) comprenant une pluralité de hottes (115) prévues pour maintenir l'article alimentaire et disposées en dessous de chaque fente de la pluralité de fentes (113) ;
le raccordement d'une unité de chauffe intérieure (133) à la plaque inférieure (135) entre deux hottes de la pluralité de hottes (115), ladite unité de chauffe intérieure étant prévue pour faire émettre de la chaleur ayant une première puissance par une première face et par une deuxième face ;
le raccordement d'une unité de chauffe extérieure (131) à la plaque inférieure adjacente à une hotte (115) de la paire de hottes (115), opposée à l'unité de chauffe intérieure (133), ladite unité de chauffe extérieure (131) étant prévue pour faire émettre de la chaleur ayant une deuxième puissance par une face en vis-à-vis de la hotte, la deuxième puissance étant supérieure à la première puissance ; et
le raccordement du corps de chauffe à la base au moyen de tiges (151), de manière à définir une cavité (157) entre la plaque inférieure (135) et la base (109), et ledit au moins un orifice de ventilation de base (171), la cavité (157), la pluralité d'ouvertures (141) et ledit au moins un orifice de ventilation de boîtier (161) étant en liaison d'écoulement fluidique.
